# EUROPÄISCHE PATENTANMELDUNG

(11) **EP 3 719 958 A1**
(43) Veröffentlichungstag der Anmeldung: **07.10.2020**
(21) Anmeldenummer: 19167116.3
(22) Anmeldetag: 03.04.2019
(51) Int. Cl.: H02K 1/02, H02K 1/24, H02K 15/02

(54) **WEICHMAGNETISCHER VERBUNDWERKSTOFF FÜR ELEKTRISCHE MASCHINEN**

(71) Anmelder: Siemens Aktiengesellschaft, 80333 München (DE)
(72) Erfinder: Rieger, Gotthard, 80636 München (DE); Schuh, Carsten, 85598 Baldham (DE)

(57) **Zusammenfassung**

Die Erfindung gibt ein Verfahren zur Herstellung eines geschichteten Verbundwerkstoffs (3) mittels eines Sprühverfahrens, wobei abwechselnd aufeinander erste Schichten (S1) und zweite Schichten (S2) aufgetragen werden, an. Die ersten Schichten (S1) sind aus einem elektrisch isolierenden ersten Material (1) gebildet und die zweiten Schichten (S2) aus zueinander beabstandeten Bahnen aus einem zumindest teilweise weichmagnetischen zweiten Material (2) gebildet, wobei die Bahnen mit dem zweiten Material (2) derart umhüllt sind, dass der Abstand zwischen benachbarten Bahnen durch das erste Material (1) ausgefüllt ist und wobei auf der letzten zweiten Schicht (S2) eine erste Schicht (S1) folgt.

Außerdem gibt die Erfindung einen geschichteten Verbundwerkstoff (3), einen Rotor (R) und einen Stator (S) an.

## Beschreibung

### HINTERGRUND DER ERFINDUNG

### Gebiet der Erfindung

Die vorliegende Erfindung betrifft ein Verfahren zur Herstellung eines geschichteten Verbundwerkstoffs mittels eines Sprühverfahrens. Die Erfindung betrifft des Weiteren einen geschichteter Verbundwerkstoff, einen Rotor und einen Stator.

### Beschreibung des Stands der Technik

Rotoren und Statoren für elektrische Maschinen enthalten in vielen Ausführungsformen als Kernkomponente weichmagnetische Bereiche, die der magnetischen Flussführung dienen, z.B. in der Ausgestaltung als gestapelte Magnetbleche. Diese weichmagnetischen Bereiche sind idealerweise optimal in der gewünschten Magnetflussrichtung ausgerichtet (gekrümmt entlang der Magnetflusslinien) sowie gleichzeitig in einer oder beiden anderen Raumrichtungen hochgradig strukturiert und separiert mittels elektrischer Isolatorlagen, um die unerwünschte Entstehung von Wirbelströmen zu unterbinden.

Bei hoch effizienten Antrieben sowie bei Motoren mit zunehmend höherem Drehzahlbereich stößt die heutige Blechpaketierung mit Blechdicken von minimal 100µm in sog. NO-Blechen (non-oriented) an ihre technologischen Grenzen. Wichtig für neuartige Technologien zum Aufbau magnetischer Komponenten bleibt allerdings, dass trotz Strukturierung ein möglichst hoher Volumenfüllgrad an weichmagnetischem, d.h. "aktivem" Material sowie vorteilhafterweise eine nanokristalline Mikrostruktur des weichmagnetischen Materials vorliegt, um die hohe Sättigungsmagnetisierung durch die kristalline Struktur zu erhalten und gleichzeitig Ummagnetisierungsverluste zu minimieren (siehe D^5 Gesetz nach Herzer). Diese Eigenschaft zeigen derzeit nur rascherstarrte dünne Bänder auf Eisenbasis (Finemet bzw. Vitrovac), die aufgrund der nanokristallinen Struktur so spröde sind, dass eine Verarbeitung zu Motorkomponenten in der oben beschriebenen Form nicht möglich ist.

Als Stand der Technik können die folgenden Vorrichtungen/ Verfahren angesehen werden:
- Stapel aus dünnen Magnetblechen mit Isolationsschichten, ggf. mit (laser-)strukturierten Oberflächen zur Reduzierung anomaler Wirbelstromverluste z.B. für Asynchronmotoren,
- Strukturierung einzelner Magnetbleche in zwei Komponenten (nicht-magnetische Bereiche, aktive magnetische Bereiche), z.B. für Reluktanzmaschinen,
- Weichmagnetische Komposit-Kerne, sog. Soft Magnetic Composites (SMC) mit dem Vorteil isotroper Magneteigenschaften, z.B. für Klauenpol- oder Transversalmotoren und
- Komposite aus ausgerichteten weichmagnetischen metallischen Fasern in Kunststoffmatrizes (noch in der Entwicklung).

### ZUSAMMENFASSUNG DER ERFINDUNG

Die Aufgabe der Erfindung besteht darin, eine verbesserte Lösung für die Herstellung der weichmagnetischen Bereiche von Rotoren und / oder Statoren von elektrischen Maschinen anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein Verfahren zur Herstellung eines geschichteten Verbundwerkstoffs auf einem Substrat anzugeben, wobei der Verbundwerkstoff mittels Aerosolabscheidung hergestellt ist und weichmagnetische Bahnen, die von einem Isolationsmaterial umgeben sind und in der gewünschten magnetischen Flussrichtung orientiert sind, aufweist.

Die Erfindung beansprucht ein Verfahren zur Herstellung eines geschichteten Verbundwerkstoffs mittels eines Sprühverfahrens, wobei abwechselnd aufeinander erste Schichten und zweite Schichten aufgetragen werden, wobei die ersten Schichten aus einem elektrisch isolierenden ersten Material gebildet sind und die zweiten Schichten aus zueinander beabstandeten Bahnen aus einem zumindest teilweise weichmagnetischen zweiten Material gebildet sind, wobei die Bahnen mit dem zweiten Material derart umhüllt sind, dass der Abstand zwischen benachbarten Bahnen durch das erste Material ausgefüllt ist und wobei auf der letzten zweiten Schicht eine erste Schicht folgt.

In einer weiteren Ausgestaltung kann das erste Material Keramik (z.B. Aluminiumoxid, Zirkonoxid, Magnesiumoxid oder Mullit), Glas oder Kunststoff (Polycarbonat, Polyester, Polyimid) sein.

Das erste Material dient zur elektrischen Isolation der einzelnen Bahnen (weichmagnetischen Strukturen) und muss daher anders als die Bahnen nicht besonders dicht ausgebildet sein. Hier ist u.U. auch eine Applikation mittels einfacherer alternativer Suspensions-Sprühverfahren unter Verwendung binderloser oder -haltiger Partikelsuspensionen denkbar. Wichtig dabei ist die Erzielung eines ausreichend mechanisch stabilen Komposits, da der geschichtete Verbundwerkstoff z.B. eingesetzt im Rotor oder Stator einer elektrischen Maschine hohen Beschleunigungs- und Fliehkräfte ausgesetzt ist.

In einer weiteren Ausgestaltung kann das zweite Material ein nanokristallines weichmagnetisches Material sein.

Die Entstehung nanokristalliner Gefüge im Abscheideprozess (z.B. durch die Aerosol-Deposition Method (ADM))) ist dabei insbesondere für weichmagnetische Materialien sehr günstig, da die kristalline Anisotropie unterhalb der magnetischen Austauschlänge (∼Blochwanddicke) ausgemittelt wird und sich daher keine Verankerung von Blochwänden (Pinning) einstellt, die zu erhöhten Ummagnetisierungsverlusten führt (theoretische Beschreibung mittels statistischer Potentialtheorie). Gleichzeitig wird in Eisenbasislegierungen die Magnetostriktion nahenull.

In einer weiteren Ausgestaltung kann das zweite Material aus einer Eisenbasislegierung mit über 90% Gewichtsprozent Eisen, einer Nickel-Eisenlegierung und / oder einer Eisen-Cobalt-Legierung mit über 50 Gewichtsprozent Eisen gebildet sein.

In einer weiteren Ausgestaltung kann das zweite Material Additive, wie Silizium, Phosphor, Mangan, Molybdän, Niob enthalten.

In einer weiteren Ausgestaltung können die Bahnen aufeinanderfolgender zweiter Schichten zueinander versetzt ausgebildet sein. Das bedeutet, dass die Bahnen einer beliebigen zweiten Schicht (x) in den Zwischenräumen der Bahnen der vorherigen zweiten Schicht (x-1) liegen. Das hat den Vorteil einer erhöhten mechanischen Stabilität des geschichteten Verbundwerkstoffes.

In einer weiteren Ausgestaltung kann das Sprühverfahren zur Herstellung des ersten Materials Aerosolabscheidung (auch als Aerosol-Deposition Method (ADM) bekannt) und / oder ein Suspensions-Sprühverfahren unter Verwendung binderloser oder - haltiger Partikelsuspensionen sein.

In einer weiteren Ausgestaltung kann das Sprühverfahren zur Herstellung des zweiten Materials Aerosolabscheidung (Aerosol-Deposition Method (ADM)) sein. Ziel ist die Abscheidung/ Herstellung dünner, weichmagnetischer Bahnen.

Der Einsatz der ADM ist dabei besonders vorteilhaft, weil damit bei Raumtemperatur bereits dichte und zugleich nanokristalline Gefüge erzeugt werden können. Eine nachfolgende Wärmebehandlung, z.B. zur Sinterung, kann damit entfallen.

In einer weiteren Ausgestaltung können die Bahnen einen Querschnitt von 5-200 x 50-200 µm aufweisen. Bevorzugt weisen die Bahnen einen Querschnitt von 20-80 x 20-80 µm auf. Von besonderem Vorteil ist ein rechteckiger Querschnitt von 50 x 50 µm. Der Querschnitt der Bahnen wird dabei in Abhängigkeit von der Stärke (oder Dicke) der ersten Schicht bzw. dem Abstand / dem Pitch zwischen den zweiten Schichten gewählt. Das Wesentliche bei der Wahl des Querschnitts und des Abstandes ist, einen möglichst hohen Füllgrad an Bahnen bei ausreichender Isolation zu erhalten. Ein hoher Füllgrad verbessert die mechanische Stabilität. Ziel ist die Herstellung dünner Bahnen aus dem weichmagnetischen zweiten Material mit möglichst dichter Rechteckpackung.

In einer weiteren Ausgestaltung kann der Abstand zwischen den Bahnen innerhalb der zweiten Schicht und / oder zwischen den Bahnen aufeinanderfolgender zweiter Schichten 0.5 - 5 µm sein.

Unter Annahme einer Schichtdicke der ersten Schicht (Isolationsschicht) von 2 µm und einem quadratischen Querschnitt der Bahnen (Weichmagnetbahn) von 50 x 50 µm² ergibt sich ein maximaler Füllgrad von 96%.

In einer weiteren Ausgestaltung kann das Substrat ein Rotorkern oder ein Statorgehäuse einer elektrischen Maschine sein.

In einer weiteren Ausgestaltung kann das Substrat Vertiefungen zur Aufnahme des geschichteten Verbundwerkstoff aufweisen.

Vorteilhafterweise wird als Substratoberfläche direkt ein entsprechend vorgefertigter Rotorkern bzw. ein Statorgehäuse mit bereits in magnetischer Flussrichtung ausgebildeten Vertiefungen bzw. Mulden herangezogen, in denen der geschichtete Verbundwerkstoff schichtweise aufgebaut werden kann.

In einer weiteren Ausgestaltung können die ersten Schichten und zweiten Schichten unter Drehung des Substrates aufgetragen werden. Zur effektiven industriellen Fertigung können so bei langsamer Drehung z.B. eines Rotorkörpers und Anordnung mehrerer Düsenreihen des Sprühverfahrens kontinuierlich entlang des Rotorumfangs sukzessive alternierend die einzelnen Schichtlagen der ersten Schichten und der zweiten Schichten aufgebaut werden, wobei die Strukturierung der Bahnen aus dem weichmagnetischen zweiten Material vorteilhafterweise über Metallmasken erfolgt.

Die Erfindung beansprucht außerdem einen geschichteten Verbundwerkstoff. Der geschichtete Verbundwerkstoff weist abwechselnd aufeinander aufgetragene erste Schichten und zweite Schichten auf, wobei die ersten Schichten aus einem elektrisch isolierenden ersten Material gebildet sind und die zweiten Schichten aus zueinander beabstandeten Bahnen aus einem zumindest teilweise weichmagnetischen zweiten Material gebildet sind, wobei die Bahnen mit dem zweiten Material derart umhüllt sind, dass der Abstand zwischen benachbarten Bahnen durch das erste Material ausgefüllt ist und wobei auf der letzten zweiten Schicht eine erste Schicht folgt.

In einer weiteren Ausgestaltung wird der geschichtete Verbundwerkstoff nach einem erfindungsgemäßen Verfahren hergestellt.

Die Erfindung beansprucht außerdem einen Rotor einer elektrischen Maschine aufweisend einen erfindungsgemäßen geschichteten Verbundwerkstoff.

Die Erfindung beansprucht außerdem einen Stator einer elektrischen Maschine aufweisend einen erfindungsgemäßen geschichteten Verbundwerkstoff.

Die vorliegende erfindungsgemäße Lösung zeichnet sich durch folgende Vorteile aus:
- nanokristalline Gefügestruktur der Bahnen der zweiten Schichten (weichmagnetischen Schichten) führt zu verbesserten magnetischen Eigenschaften (geringere Verluste, virtuell verschwindende Magnetostriktion; wichtig insbesondere für die im grob-kristallinen nicht-magnetostriktionsfreien Eisenbasislegierungen),
- erhöhte Freiheitsgrade zur Designoptimierung des geschichteten Verbundwerkstoffs (Ausrichtung in Bezug auf magnetische Flussrichtungen, Volumenfüllgrad, Aspektverhältnisse, elektrische Isolation, mechanische Belastbarkeit),
- gute mechanische Anbindung des geschichteten Verbundwerkstoffs an einen Rotorkörper verbessert die mechanische Stabilität auch bei hohen Drehzahlen,
- geringe innere Spannungen im Aufbau des geschichteten Verbundwerkstoffs durch ein Niedertemperatur-Abscheideverfahren ADM (gute Struktur-Matrix Anbindung) und
- kosteneffiziente Herstellung durch ein Hochrate-Abscheidungsverfahren ADM inklusiv der Möglichkeit zur weitgehenden Automatisierung und Parallelisierung der Schichterzeugung.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: einen Rotor mit axialer Blechpaketierung,
- Fig. 2: ein Rotorkörper mit geschichteten Verbundwerkstoffen
- Fig. 3: einen Querschnitt durch einen geschichteten Verbundwerkstoff und
- Fig. 4: einen Reluktanzmotor.

### DETAILLIERTE BESCHREIBUNG DER ERFINDUNG

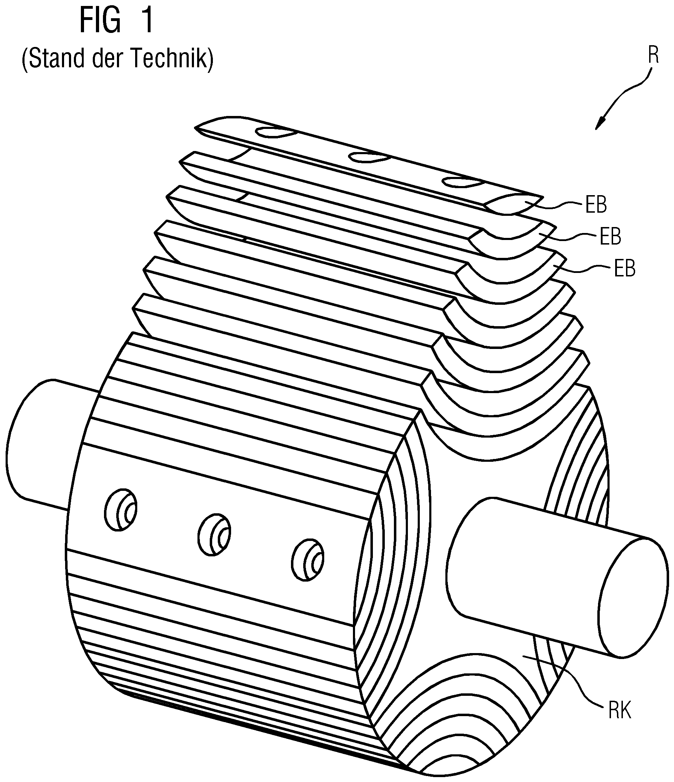

Fig. 1 zeigt einen Rotor R eines möglichen Reluktanzmotors mit axialer Blechpaketierung nach dem Stand der Technik. Der Rotor R weist mehrere Elektrobleche EB auf. Der so gefertigte Rotor R hat den Nachteil hoher Wirbelströme in Blechebene (der Ebene der Elektrobleche EB). Wesentlich häufiger als in axialer Blechschichtung werden die Elektrobleche EB nach dem Stand der Technik transversal paketiert.

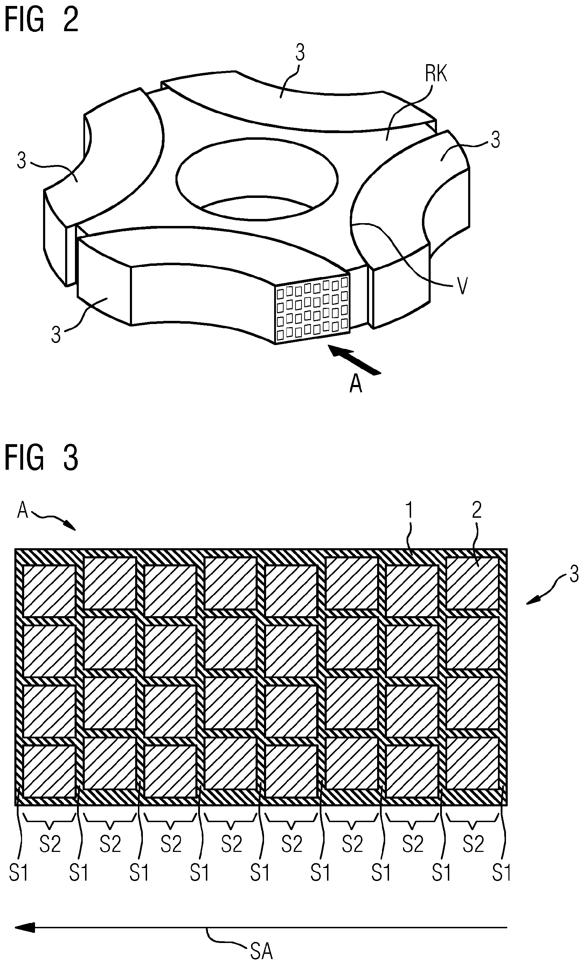

Fig. 2 zeigt beispielhaft einen Rotorkörper RK eines Reluktanzmotors mit geschichteten Verbundwerkstoffen 3. Die geschichteten Verbundwerkstoffe 3 sind in Mulden oder Vertiefungen V des Rotorkörpers RK angeordnet. Vorteilhafterweise ist der Rotorkern RK bzw. ein Statorgehäuse mit bereits in magnetischer Flussrichtung ausgebildeten Vertiefungen V bzw. Mulden, in denen der geschichtete Verbundwerkstoff 3 schichtweise aufgebaut werden kann, vorgefertigt.

Zur effektiven industriellen Fertigung können so bei langsamer Drehung z.B. des Rotorkörpers RK und Anordnung mehrerer Düsenreihen eines Sprühverfahrens kontinuierlich entlang des Rotorumfangs sukzessive alternierend die einzelnen Schichtlagen der ersten Schichten und der zweiten Schichten aufgebaut werden, wobei die Strukturierung der Bahnen aus dem weichmagnetischen zweiten Material vorteilhafterweise über Metallmasken erfolgt. Die Blickrichtung A markiert die Ansicht, welche in Fig. 3 vergrößert dargestellt ist.

Fig. 3 zeigt einen Querschnitt der Blickrichtung A aus Fig. 2 durch den geschichteten Verbundwerkstoff 3. Der geschichtete Verbundwerkstoff 3 weist abwechselnd aufeinander aufgetragene erste Schichten S1 und zweite Schichten S2 auf, wobei die ersten Schichten S1 aus einem elektrisch isolierenden ersten Material 1 gebildet sind und die zweiten Schichten S2 aus zueinander beabstandeten Bahnen aus einem zumindest teilweise weichmagnetischen zweiten Material 2 gebildet sind, wobei die Bahnen mit dem zweiten Material 2 derart umhüllt sind, dass der Abstand zwischen benachbarten Bahnen durch das erste Material 1 ausgefüllt ist und wobei auf der letzten zweiten Schicht S2 eine erste Schicht S1 folgt.

Das erste Material 1 kann Keramik (z.B. Aluminiumoxid, Zirkonoxid, Magnesiumoxid oder Mullit), Glas oder Kunststoff (Polycarbonat, Polyester, Polyimid) sein.
Das erste Material 1 dient zur elektrischen Isolation der einzelnen Bahnen (weichmagnetischen Strukturen) und muss daher anders als die Bahnen nicht besonders dicht ausgebildet sein. Hier ist u.U. auch eine Applikation mittels einfacherer alternativer Suspensions-Sprühverfahren unter Verwendung binderloser oder -haltiger Partikelsuspensionen denkbar. Wichtig dabei ist die Erzielung eines ausreichend mechanisch stabilen Komposits, da der geschichtete Verbundwerkstoff z.B. eingesetzt im Rotor R oder Stator einer elektrischen Maschine hohen Beschleunigungs- und Fliehkräfte ausgesetzt ist.

Das zweite Material 2 kann ein nanokristallines weichmagnetisches Material sein, aus über 90% Eisen, einer Nickel-Eisenlegierung und / oder einer Eisen-Cobalt-Legierung gebildet sein und Additive, wie Silizium, Phosphor, Mangan, Molybdän, Niob enthalten.

Die Bahnen aus dem zweiten Material 2 sind in aufeinanderfolgenden zweiten Schichten S1 zueinander versetzt ausgebildet sein. Das bedeutet, dass die Bahnen einer beliebigen zweiten Schicht (x) in den Zwischenräumen der Bahnen der vorherigen zweiten Schicht (x-1) liegen. Das hat den Vorteil einer erhöhten mechanischen Stabilität des geschichteten Verbundwerkstoffes.

Das Sprühverfahren zur Herstellung des ersten Materials 1 kann Aerosolabscheidung (auch als Aerosol-Deposition Method (ADM) bekannt) und / oder ein Suspensions-Sprühverfahren unter Verwendung binderloser oder -haltiger Partikelsuspensionen sein.

Das Sprühverfahren zur Herstellung des zweiten Materials 2 kann Aerosolabscheidung (Aerosol-Deposition Method (ADM)) sein. Ziel ist die Abscheidung/ Herstellung dünner, weichmagnetischer Bahnen. Die Bahnen wurden in der durch den Pfeil angegebenen Schichtabfolge SA hergestellt.

Die Bahnen weisen einen rechteckigen Querschnitt von 50 x 50 µm auf. Der Abstand zwischen den Bahnen innerhalb der zweiten Schicht S2 und zwischen den Bahnen aufeinanderfolgender zweiter Schichten S2 beträgt im Beispiel 2 µm.

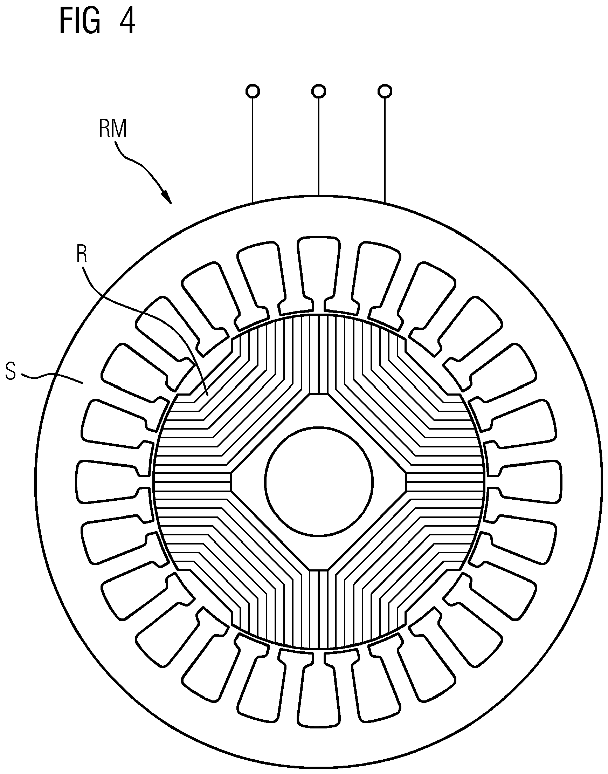

Fig. 4 zeigt als Beispiel eines elektrischen Antriebs mit vorteilhafter Nutzung einer Vorzugsrichtung im weichmagnetischen Blechkern eines Reluktanzmotors RM. Der Reluktanzmotor RM weist einen Rotor R und einen Stator S auf. Der Rotor R weist erfindungsgemäß hergestellte geschichtete Verbundwerkstoffe auf.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Herstellung eines geschichteten Verbundwerkstoffs (3) mittels eines Sprühverfahrens, wobei abwechselnd aufeinander erste Schichten (S1) und zweite Schichten (S2) aufgetragen werden,
- wobei die ersten Schichten (S1) aus einem elektrisch isolierenden ersten Material (1) gebildet sind und die zweiten Schichten (S2) aus zueinander beabstandeten Bahnen aus einem zumindest teilweise weichmagnetischen zweiten Material (2) gebildet sind,
- wobei die Bahnen mit dem zweiten Material (2) derart umhüllt sind, dass der Abstand zwischen benachbarten Bahnen durch das erste Material (1) ausgefüllt ist und
- wobei auf der letzten zweiten Schicht (S2) eine erste Schicht (S1) folgt.

2. Verfahren nach Anspruch 1,
**dadurch gekennzeichnet,**
**dass** das erste Material (1) Keramik, Glas oder Kunststoff ist.

3. Verfahren nach einem der vorherigen Ansprüche,
**dadurch gekennzeichnet,**
**dass** das zweite Material (2) ein nanokristallines weichmagnetisches Material ist.

4. Verfahren nach Anspruch 3,
**dadurch gekennzeichnet,**
**dass** das zweite Material (2) aus einer Eisen-Basislegierung mit über 90 Gewichtsprozent Eisen, einer Nickel-Eisenlegierung und/ oder einer Eisen-Cobalt-Legierung mit über 50 Gewichtsprozent Eisen gebildet ist.

5. Verfahren nach Anspruch 3 oder 4,
**dadurch gekennzeichnet,**
**dass** das zweite Material (2) Additive enthält.

6. Verfahren nach einem der vorherigen Ansprüche,
**dadurch gekennzeichnet,**
**dass** die Bahnen aufeinanderfolgender zweiter Schichten (S2) zueinander versetzt ausgebildet sind.

7. Verfahren nach einem der vorherigen Ansprüche,
**dadurch gekennzeichnet,**
**dass** das Sprühverfahren zur Herstellung des ersten Materials (1) Aerosolabscheidung und / oder ein Suspensions-Sprühverfahren und das Sprühverfahren zur Herstellung des zweiten Materials (2) Aerosolabscheidung ist.

8. Verfahren nach einem der vorherigen Ansprüche,
**dadurch gekennzeichnet,**
**dass** die Bahnen einen Querschnitt von 5-200 x 50-200 µm aufweisen und der Abstand zwischen den Bahnen innerhalb der zweiten Schicht (S2) und / oder zwischen den Bahnen aufeinanderfolgender zweiter Schichten (S2) 0.5 - 5 µm ist.

9. Verfahren nach einem der vorherigen Ansprüche,
**dadurch gekennzeichnet,**
**dass** das Substrat ein Rotorkern (RK) oder ein Statorgehäuse einer elektrischen Maschine ist.

10. Verfahren nach einem der vorherigen Ansprüche,
**dadurch gekennzeichnet,**
**dass** das Substrat Vertiefungen zur Aufnahme des geschichteten Verbundwerkstoff (3) aufweist.

11. Verfahren nach einem der vorherigen Ansprüche,
**dadurch gekennzeichnet,**
**dass** die ersten Schichten (S1) und zweiten Schichten (S2) unter Drehung des Substrates aufgetragen werden.

12. Geschichteter Verbundwerkstoff (3),
aufweisend:
- abwechselnd aufeinander aufgetragene erste Schichten (S1) und zweite Schichten (S2),
- wobei die ersten Schichten (S1) aus einem elektrisch isolierenden ersten Material (1) gebildet sind und die zweiten Schichten (S2) aus zueinander beabstandeten Bahnen aus einem zumindest teilweise weichmagnetischen zweiten Material (2) gebildet sind,
- wobei die Bahnen mit dem zweiten Material (2) derart umhüllt sind, dass der Abstand zwischen benachbarten Bahnen durch das erste Material (1) ausgefüllt ist und
- wobei auf der letzten zweiten Schicht (S2) eine erste Schicht (S1) folgt.

13. Geschichteter Verbundwerkstoff (3), der nach einem Verfahren der Ansprüche 2 bis 11 hergestellt wird.

14. Rotor (R) einer elektrischen Maschine, aufweisend einen geschichteten Verbundwerkstoff (3) nach Anspruch 12 oder 13.

15. Stator einer elektrischen Maschine, aufweisend einen geschichteten Verbundwerkstoff (3) nach Anspruch 12 oder 13.
